# EUROPEAN PATENT SPECIFICATION

(11) **EP 2 324 477 B1**
(45) Date of publication and mention of the grant of the patent: **25.07.2012**
(21) Application number: 09785524.1
(22) Date of filing: 26.08.2009
(51) Int. Cl.: G03C 1/73, G03F 7/00, G03F 7/025

(54) **DATA STORAGE MEDIUM**
DATENSPEICHERMEDIUM
SUPPORT D INFORMATIONS

(30) Priority: 10.09.2008 GB 0816541; 11.09.2008 GB 0816619; 02.04.2009 GB 0905785
(43) Date of publication of application: 25.05.2011
(73) Proprietor: DataLase Ltd, Widnes WA8 8FW (GB)
(72) Inventor: JARVIS, Anthony, Widnes Cheshire WA8 8FW (GB); WYRES, Christopher, Widnes Cheshire WA8 8FW (GB); PHILIPS, Tristan, Widnes Cheshire WA8 8FW (GB); CRIDLAND, John, Widnes Cheshire WA8 8FW (GB); WALKER, Martin, Widnes Cheshire WA8 8FW (GB)
(74) Representative: Creek, Isobel Clare
(86) International application number: PCT/GB2009/051059
(87) International publication number: WO 2010/029327

(56) References cited:
- WO-A-2006/051309
- WO-A1-98/19868
- US-A- 4 910 107
- CHI C J ET AL: "Digital thin-film color optical memory" APPLIED PHYSICS LETTERS, AIP, AMERICAN INSTITUTE OF PHYSICS, MELVILLE, NY, US, vol. 78, no. 2, 8 January 2001 (2001-01-08), pages 255-257, XP012028014 ISSN: 0003-6951 cited in the application

## Description

### Field of the Invention

This invention relates to a data storage medium, and methods for forming and reading it.

### Background of the Invention

Stored data are generally represented by the ones and zeros of the binary number system. Data on Compact Disks (CDs), for instance, is stored in the form of pits (corresponding to 1 in the binary code) and bumps (corresponding to 0 in the binary code). Previous efforts to store more data have focused on increasing the number of pits on the disk by making the pits smaller.

US 4,863,832 provides a three-value recording medium which uses two kinds of pits on one sheet of optical disk. A recording layer is formed by combining a compound selected from azulenium salts, pyrylium dyes, diene compounds, croconic methane dyes or polymethine compounds with a diacetylene derivative. Light is applied to the layer which changes the recording layer from transparent to a blue colour. Upon application of heat, portions of this layer are then either changed to a red colour, or are melted to form a pit.

US 4,737,427 describes an optical recording medium having a substrate and a recording layer of at least two J-aggregates of dyes. Suitable photocromic dyes include spiropyrans, azobenzenes, fulgides, indigoes, thioindigoes and triarylmethanes. Different types of dye aggregates are used having different absorption spectra to ensure good optical reading and writing operations.

US 6,479,214 relates to optical data storage and retrieval. The lands and pits of conventional disks are replaced with dots that absorb at different wavelengths. Various chemical compounds can be used to record the information, including silver halide grains.

Steckyl et al in Applied Physics Letters, 2001, 78(2), 255-257 describe a data storage device which has enhanced capacity. A 800 nm thick silicon dioxide film is added to a silicon wafer. To write information onto the film, holes of 16 different depths are added using focused ion beam milling. The depth of the hole determines how much light is reflected. Each hole (colour detected) represents a four-bit number which allowed the researchers to write more than 5 GB of information on a square inch of film. However, the researchers acknowledge that the holes can only be made at a speed of 310 microns per second, which means that the recording of information onto the storage device is very slow.

There remains a need to provide data storage media with greater capacity, which can be written at high speed.

### Summary of the Invention

The first aspect of the invention is a data storage medium comprising recording information in the form of a track of data points, the colour of each data point being selected from at least three different colours, wherein the recording information is disposed on a substrate which comprises a colour forming composition, said colour forming composition comprising a colour former which is susceptible to changing to at least three different colours when irradiated with a laser, wherein the colour former is a leuco dye, a diacetylene or a carbazole.

The second aspect of the invention is a method of forming a data storage medium according to the first aspect of the invention, comprising directing laser beam radiation corresponding to recording information onto a colour-forming substrate and the position of the substrate with respect to the laser beam is varied such that a track of data points, the colour of each point being selected from at least three different colours, is produced.

The invention is also a method of reading a data storage medium according to the first aspect of the invention comprising scanning laser radiation over the medium and detecting reflected radiation using an array of colour detectors.

The recording information can be placed onto the data storage medium according to this invention much more rapidly than by the technique described in Steckyl et al. Furthermore, the use of at least three different colours allows more data to be stored than in conventional data storage devices which rely on pits and bumps alone. Advantageously, the data can be read extremely rapidly from the storage medium.

### Brief Description of the Figures

Figure 1 illustrates a data point comprising multiple colours or shades;
Figure 2 shows a track of data points together with a laser and colour detector; and
Figure 3 shows tracks of data points with pits.

### Description of the Invention

The track of data points comprises points which have a colour selected from at least three different colours. "Shades of colour" are inciuded within the term "colour" in this specification.

A track of data points typically comprises points of four different colours or shades of colour. In computer terminology, this gives 4 states, or 5 including a null state. The use of four different colours generally allows 2 Bits of information to be stored. The use of eight different colours allows 3 Bits of information to be stored, and sixteen colours 4 Bits, and so on. Preferably, 2^{x}, wherein x is in the range 2-10, colours are used.

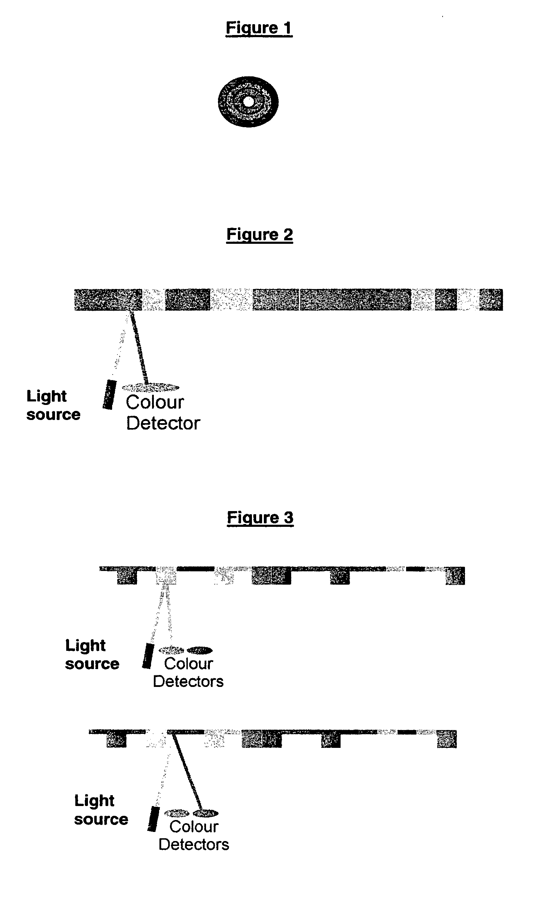

An exemplary track of data points is shown in Figure 2. This is a linear track, although of course other configurations are envisaged. The track is a path of data points of different colours.

The recording medium need not be written in binary code. Thus the code may be recorded in base 10, and later translated into binary code.

The data points are generally in the form of dots with a diameter of around 1 micron. The points normally form a track on a surface of the data storage medium. The track of data points may be in the form of a spiral or circular track on the surface of the data storage medium. The spacing and colour of each datapoint produces a code which corresponds to the recording information.

The density of data storage can be increased further by employing data points wherein each data point comprises multiple colours or shades of colour (figure 1). Such points can be generated using specific laser/light beam profiles such as: Gaussian, super-Gaussian e.g. a 'top-hat' type profile, multi-transverse mode e.g. a 'doughnut' type profile, and combinations thereof. Alternatively, beam profiles can be generated using a beam modifying or mixing component such as a diffractive element. It is also possible for the laser/light beam to exhibit multiple beam profiles. The present invention is not limited to the use of lasers. Non-coherent light sources, such as LEDs, can also be used to create the data points of the present invention.

Recording media within the scope of the invention include disks, tapes, cards, paper, films and the like, and particularly preferred are disks such as CDs and DVDs. Suitable substrates for forming these media are known in the art. These include plastics such as polycarbonate plastic substrates. The recording medium according to this invention comprises a composition which is susceptible to forming at least three different colours when irradiated. This composition may be coated onto a surface of the substrate, or alternatively, it may be incorporated into the material which forms the substrate. The composition could also be part of a laminate construction with the substrate material.

Compositions which are susceptible to changing to least three different colours when irradiated are known - see for instance, WO06/018640, WO06/051309, WO06/114594, WO07/039715 and WO07/063332 (the content of each of which is incorporated by reference) which describe laser imaging and also materials that can be used for that purpose. WO02/07454 describes laser-markable compositions comprising ammonium octamolybdate. Such compositions can generally only undergo one colour change. However, they may be used in combination with other colour-formers, and in the embodiment of this invention wherein the colour-forming composition is layered (see below). Compositions which are suitable for use in the present invention will hereinafter be referred to as "imageable compositions". The process of forming the colours from the imageable compositions will hereinafter be referred to as "marking."

Compositions imageable with UV, N, visible or CO₂ lasers may be used.

A laser-imageable composition for use in the present invention typically comprises colour-former and a binder. Further additives may include NIR absorbers, dispersing agents, acid-generators, UV absorbers/stabilizers, processing aids, cosolvents, whitening agents, foam suppressants etc.

The skilled person can select a suitable dye, or combination of dyes, according to the eventual colours required. The marking laser intensity, wavelength and/or time of exposure can all be varied to ensure that an appropriate colour is produced. WO2006/114594 describes an apparatus which includes a laser diode and galvanometer, and is suitable for aligning the laser beam onto the colour forming composition in the present invention. WO2007/039715 furthermore describes a method of inkless printing. As in these publications, the colour of the colour-forming composition in this invention is selectable according to the fluence level of the irradiation at a desired point.

The laser-imageable composition can be based on an inorganic or organic colour-former, that can be marked with a CO₂ laser, NIR laser, visible laser, or UV laser. An inorganic colour-former can be a oxyanion of a multivalent metal salt, preferred examples being moiybdates, tungstates and vanadates. The salts can be Group 1 or 2 metal salts, ammonium salts or amine salts. Further examples of inorganic colour-formers suitable for use in the present invention can be found in WO02/074548 Preferred examples are octamolybdates, e.g. ammonium octamolybdate. Other examples include ammonium heptamolybdate, and amine molybdates such as bis(2-ethylhexyl)amine molybdate. Further examples are tungstates including metatungstates such as ammonium metatungstate and vanadates including metavanadates, such as ammonium metavanadate. When these can only react to form one colour they are used in combination with one or more other colour formers as further detailed below.

Suitable organic colour-formers include materials known to those skilled in the art as leuco dyes. Suitable leuco dyes are described in "Dyestuffs and Chemicals for Carbonless Copy Paper" presented at Coating Conference (1983, San Francisco, CA pp 157-165) by Dyestuffs and Chemicals Division of Ciba-Geigy Corp Greenboro, NC. Leuco dyes are understood to be colourless in neutral or alkaline media, but become coloured when they react with an acidic or electron-accepting substance. Suitable examples include compounds such as triphenylmethanephthalide compounds, azaphthalide compounds, isoindolide phthalide compounds, vinylphthalide compounds, spiropyran compounds, rhodamine lactam compounds, lactone and dilactone compounds, benzoyl leuco methylene blue (BLMB), derivatives of bis-(p-di-alkylaminoaryl)methane, xanthenes, indolyls, auramines, chromenoindol compounds, pyrollo-pyrrole compounds, fluorene compounds, and fluoran and bisfluoran compounds, with fluoran compounds being preferred. Particularly preferred commercial leuco dye products include the Pergascript range made by Ciba Speciality Chemicals, Basel, Switzerland and those by Yamada Chemical Co. Ltd, Kyoto, Japan.

Alternative organic colour-formers that can be used in the present invention are carbazoles and diacetylenes disclosed in WO2006/018640 and WO2006/051309, the contents of which are incorporated by reference.

Any diacetylene or combination of diacetylene and other substances capable of undergoing a colour change reaction upon exposure to light may be used in the present invention.

Diacetylene compounds are substances which include at least one diacetylene group, i.e. -C≡C-C≡C-. Particularly preferred are diacetylene compounds that exhibit a polychromic colour change reaction. These compounds are initially colourless but on exposure to suitable light, such as a ultra-violet light, undergo a colour change reaction to produce a blue colour. Certain diacetylenes in their blue form can then be exposed to further light such as near-infrared light, which converts the blue form into a magenta, red, yellow and green form.

Specific examples of diacetylene compounds may be used in the present invention are given in the published patent application number WO2006/018640.

Further examples include those represented by the following general structures: 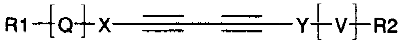 or, 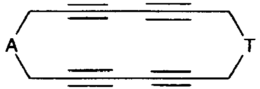 or, 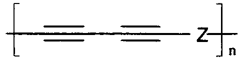 or, 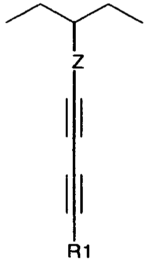 wherein,
X and Y are divalent straight-chain or branched alkylene type groups (-CH₂-)ₙ wherein n = 0 to 24, or a divalent phenylene type group (-C₆H₄-)ₙ wherein n = 0 to 1 or a combination of both types;
Q and V, if present, are divalent bridging groups such as -S-, **-O-,** -NHR'-wherein R' is hydrogen or alkyl, amide, ester or thioester groups, carbonyl or carbamate;
R1 and R2 are H or alkyl;
A and T are divalent groups that can either be an alkylene or phenylene type such as X or Y, or a bridging type such as Q or V, or a combination of both types, X or Y that additionally comprises a Q or V group;
Z is a divalent group such as X or Q or a combination of both, X that additionally comprises a Q group, or Z can be not present, and n is 2 to 20, 000, 000.

Groups X and Y are optionally substituted, preferably at the α, β or γ position with respect to the diacetylene group. For instance, there may be an α-hydroxy group, as shown in the formula below:

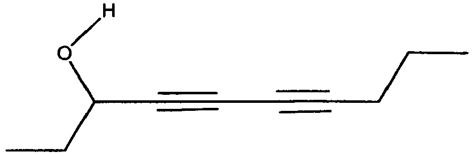

The diacetylene may be symmetrical or non-symmetrical.

Q and V are optionally substituted with groups such as amine, alcohol, thiol or carboxylic acid. Both Q and V may be present, or alternatively, just Q.

Where R1 and R2 in the above compounds are alkyl, they may be straight or branched chain and may additionally comprise other functional groups known in organic chemistry such as alcohol, amine, carboxylic acid, aromatic ring systems and unsaturated groups such as alkenes and alkynes.

Groups R1, R2, Q, V, X and Y may comprise ionic groups, which can be anionic or cationic. Examples include sulphate groups (-SO₃- and ammonium groups. The ionic groups can have any suitable counterion.

Further diacetylene compound examples are diacetylene carboxylic acids and derivatives thereof. A particularly preferred diacetylene carboxylic acid compounds are 10,12-pentacosadiynoic acid and 10,12-docosadiyndioic acid and their derivatives thereof. Further examples include: 5,7,-dodecadiyndioic acid, 4,6-dodecadiynoic acid, 5,7-eicosadiynoic acid, 6,8-heneicosadiynoic acid, 8,10-heneicosadiynoic acid, 10, 12-heneicosadiynoic acid, 10,12-heptacosadiynoic acid, 12,14-heptacosadiynoic acid, 2,4-heptadecadiynoic acid, 4,6-heptadecadiynoic acid, 5,7-hexadecadiynoic acid, 6,8-nonadecadiynoic acid, 5,7-octadecadiynoic acid, 10,12-octadecadiynoic acid, 12,14-pentacosadiynoic acid, 2,4-pentadecadiynoic acid, 5,7-tetradecadiynoic acid, 10,12-tricosadiynoic acid 2,4-tricosadiynoic acid, and derivatives thereof. Diacetylene alcohols and diol compounds and derivatives thereof are also preferred, examples include: 5,7-dodecadiyn-1,12-diol, 5,7-eicosadiyn-1-ol, 2,4-heptadecadiyn-1-ol, 2,4-hexadiyn-1,6-diol, 3,5-octadiyn-1,8-diol, 4,6-decadiyn-1,10-diol, 2,7-dimethyl-3,5-octadiyn-2,7-diol, 14-hydroxy-10,12-tetradecadiynoic acid. Others include 1,6-diphenoxy-2,4-hexadiyne, 1,4-diphenylbutadiyne, 1,3-heptadiyne, 1,3-hexadiyne and 2,4-hexadiyne.

A combination of different diacetylenes can also be employed. A particularly preferred combination is that of 10,12-pentacosadiynoic acid or 10,12-docosadiyndioiac acid and derivatives thereof and 2,4-hexadiyn-1,6-diol. 10,12-pentacosadiynoic acid can produce blue, red and yellow. 2,4-hexadiyn-1,6-diol can produce a cyan colour. Activating 10,12-pentacosadiynoic acid to yellow and 2,4-hexadiyn-1,6-diol to cyan simultaneously gives rise to green.

A diacetylene compound that is 'activatable', i.e. has a first solid form that is relatively unreactive to light, but upon 'activation' is transformed into a second form that is relatively reactive to light and is thus capable of undergoing a colour change reaction to create a visible image, has particular utility in the present invention. Without being limited by theory the activation could be a recrystallisation, crystal form modification, co-crystal combination or a melting/re-solidification process. Reversibly activatable diacetylenes that can flip between unactivated and activated forms in response to a stimulus or removal of a stimulus also form part of the present invention.

Particularly preferred diacetylenes are those that after initial melting and re-solidification activation are colourless but become blue on exposure to light, particularly UV light. The most preferred diacetylenes compounds are carboxylic acids and derivatives thereof where:

R-C≡C-C≡C-R'

either R and/or R' comprises a COX group,
where X is: -NHY, -OY, -SY, where Y is H or any group comprising at least one carbon atom.

Particularly preferred still are derivatives in which the carboxylic acid group has been functionalised into an amide, ester or thioester. These can be easily made by reacting a diacetylene carboxylic acid with a chlorinating agent such as oxalyl chloride and then reacting the diacetylene acid chloride with a nucleophilic compound such as an amine, alcohol or thiol. A particularly preferred diacetylene carboxylic acid compound is 10,12-docosadiyndioic acid and derivatives thereof such as amides, esters, thioesters and the like. Especially particularly preferred 10,12-docosadiyndioic acid derivatives are amides. A particularly preferred still 10,12-docosadiyndioic acid amide derivative is the propargylamide in which at least one, preferably both carboxylic acid groups have been transformed into the propargylamide, as shown below:

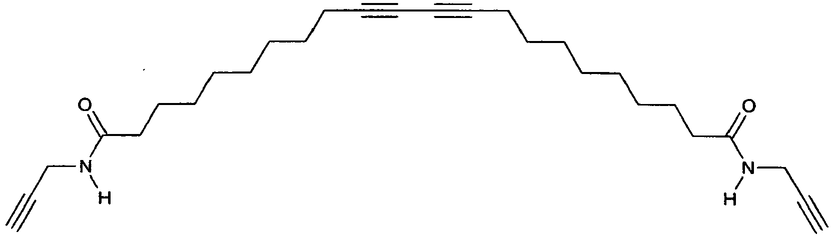

Propargylamides are made by reacting carboxylic acids with propargylamine. Other preferred amines that can be used to create suitable amides include: dipropargylamine and 1,1-dimethylpropargylamine.

The activatable diacetylene is generally used together with a NIR light absorbing agent, which is a compound that absorbs light in the wavelength range 700 to 2500 nm.

A NIR light source, such as a NIR fibre laser, is used to heat the colour forming composition only in the areas where the image is required. A UV light source, such as a germicidal lamp, is then used to flood the composition with UV light. However, the diacetylene compound only undergoes a colour change reaction to create an image in the areas which were initially exposed to NIR light. The areas of the composition unexposed to NIR light undergo a negligible colour change reaction, remain essentially colourless, and are stable to background radiation. A thermal print head may be used to initiate the heat-based pre-activation step.

Specific examples of NIR light absorbing agents include:
i. Organic NIR absorbing agents
ii. NIR absorbing 'conductive' polymers
iii. Inorganic NIR absorbing agents
iv. Non-stoichiometric inorganic absorbing agents.

Particularly preferred NIR absorbing agents are those that have essentially no absorbance in the visible region of the spectrum (400 to 700 nm) and thus give rise to coatings that appear visibly colourless.

Organic NIR absorbing agents are known as NIR dyes/pigments. Examples include but are not limited to: families of metallo-porphyrins, metallo-thiolenes and polythiolenes, metallo-phthalocyanines, aza-variants of these, annellated variants of these, pyrylium salts, squaryliums, croconiums, amminiums, diimoniums, cyanines and indolenine cyanines.

Examples of organic compounds that can be used in the present invention are taught in US6911262, and are given in Developments in the Chemistry and Technology of Organic dyes, J Griffiths (ed), Oxford: Blackwell Scientific, 1984, and Infrared Absorbing Dyes, M Matsuoka (ed), New York: Plenum Press, 1990. Further examples of the NIR dyes or pigments of the present invention can be found in the Epolight^{™} series supplied by Epolin, Newark, NJ, USA; the ADS series supplied by American Dye Source Inc, Quebec, Canada; the SDA and SDB series supplied by HW Sands, Jupiter, FL, USA; the Lumogen^{™} series supplied by BASF, Germany, particularly Lumogen^{™} IR765 and IR788; and the Pro-Jet^{™} series of dyes supplied by FujiFilm Imaging Colorants, Blackley, Manchester, UK, particularly Pro-Jet^{™} 830NP, 900NP, 825LDI and 830LDI. Further examples are taught in WO08/050153.

Examples of NIR absorbing 'conductive' polymers include PEDOT such as, the product Baytron^{®} P supplied by HC Starck. Further examples are taught in WO05/12442.

Examples of inorganic NIR absorbing agents include copper (II) salts. Copper (II) hydroxyl phosphate (CHP) is particularly preferred. Further examples are taught in WO05/068207.

Examples of non-stoichiometric inorganic absorbing agents include reduced indium tin oxide, reduced antimony tin oxide, reduced titanium nitrate and reduced zinc oxide. Further examples are taught in WO05/095516. Reduced indium tin oxide is particularly preferred in combination with a 1550 nm to 2500 nm laser.

It is particularly preferred if the absorption profile of the NIR absorbing agent approximately matches the emission wavelength(s) of the NIR light source employed.

Other light absorbing agents that can be used, instead of the NIR absorbing agent include UV (120 to 400 nm), visible (400 to 700 nm) and mid-infrared (-10.6 microns) light absorbing agents. Examples includes dyes/pigments, UV absorbers and Iriodin type agents.

Charge transfer agents may be used together with a diacetylene in the present invention. These are substances that are initially colourless but react with protons (H⁺) to produce a coloured form. Charge transfer agents that form part of the present invention include compounds known as carbazoles and suitable examples are described in WO2006/051309. Further charge transfer agents known to those skilled in the art such as leuco dyes can also be used. Charge transfer agents are usually used in combination with other substances such as light absorbing agents which can be wavelength specific, heat generating agents, acid generating agents and the like.

A particularly preferred combination for use in this invention is a diacetylene such as 10,12-pentacosadiynoic acid, or 10,12-docosadiyndioic acid (or a derivative thereof), to give blue and red, with a charge transfer agent that generates green.

If an organic colour-former is present, it may also be desirable to additionally employ an acid-generating component. This can be either a photoacid generator or a thermal acid generator. Examples of photoacid-generators include the "onium"-types, such as sulphonium and iodonium compounds. Examples of thermal acid generators include trichloromethane heterocyclics.

A laser-imageable composition of the present invention can also comprise a colour-forming system such as metal salt hydroxyl compounds; examples include sodium alginates, sodium metaborates, sodium silicates, metal salts in combination with hydroxyl compounds, of which examples include sodium carbonate with carbohydrates such as glucose and sucrose, polysaccharides such as cellulosics, gums and starches etc. Further examples of laser-imagable metal salts include sodium malonates, gluconates and heptonates. Further examples are given in WO2007/045912, WO2006/129078 and US6888095, the contents of which are incorporated herein by reference.

Any suitable source of energy may be used for marking, e.g. a laser. The laser can have a wavelength in the region 200 nm to 20 microns.

Suitable lasers include a CO₂ laser which typically emits light in the wavelength region 9-11.5 µm. A visible band laser typically emits light in the wavelength region 400-780 nm. When using such lasers, it is preferable to employ a composition comprising a material which absorbs in this region. A UV laser typically emits light in the wavelength region 190-400 nm. When using such lasers, it is preferable to employ a composition comprising a material which absorbs in this region. Near-infrared radiation is in the wavelength range 780 to 2500 nm. A suitable near-infrared laser can be a solid-state, diode, fibre or a diode array system. Whenever a near-infrared laser is employed, it is desirable to add to the laser imageable composition a near-infrared-absorbing component. Preferred near-infrared-absorbing compounds are those that have an absorbance maximum similar to the wavelength of the near-infrared radiation employed and have little or no visible colour. Suitable examples include copper compounds such as copper (II) hydroxyl phosphate (CHP), mixed metal oxide compounds, particularly reduced non-stoichiometric versions such as reduced indium tin oxide or reduced antimony tin oxide, and micas coated therewith such as the Iriodin and Lazerflair products supplied by Merck, organic polymers such as the conductive polymer product Baytron® P supplied by HC Starck, and near-infrared absorbing organic molecules, known to those skilled in the art as NIR dyes/pigments. NIR dyes/pigments than can be used include metallo-porphyrins, metallo-thiolenes and polythiolenes, metallo-phthalocyanines, aza-variants of these, annellated variants of these, pyrylium salts, squaryliums, croconiums, amminiums, diimoniums, cyanines and indolenine cyanines.

Examples of organic compounds that can be used in the present invention are taught in US6911262, and are given in Developments in the Chemistry and Technology of Organic dyes, J Griffiths (ed), Oxford: Blackwell Scientific, 1984, and infrared Absorbing Dyes, M Matsuoka (ed), New York: Plenum Press, 1990. Further examples of the NIR dyes or pigments of the present invention can be found in the EpolightTM series supplied by Epolin, Newark, NJ, USA; the ADS series supplied by American Dye Source Inc, Quebec, Canada; the SDA and SDB series supplied by HW Sands, Jupiter, FL, USA; the Lumogen^{™} series supplied by BASF, Germany, particularly Lumogen^{™} IR765 and IR788; and the Pro-Jet^{™} series of dyes supplied by FujiFilm Imaging Colorants, Blackley, Manchester, UK, particularly Pro-Jet^{™} 830NP, 900NP, 825LDI and 830LDI.

The binder can be any known to those skilled in the art. Suitable examples include acrylics, methacrylics, urethanes, cellulosics such as nitrocelluloses, vinyl polyers such as acetates and butyrals, styrenics, polyethers and polyesters. The binder system can be aqueous or organic solvent based. Examples of the binder systems that can be employed include the Texicryl range supplied by Scott-Bader, the Paranol range supplied by ParaChem, the Pioloform range supplied by Wacker-Chemie, the Elvacite range supplied by Lucite International Inc., the Joncryl range supplied by Johnson Polymers, and the WitcoBond range supplied by Baxenden Chemicals.

In an embodiment of the invention, the data storage medium comprises a colour-forming composition which is susceptible to forming at least three different colours when irradiated with a laser, wherein the colour forming composition comprises two or more layers, wherein each layer comprises a composition which is susceptible to changing colours when irradiated with a laser. A layered data storage medium is conventional in DVDs and allows a greater amount of data to be stored.

Furthermore, the coloured code of the present invention may be combined with the conventional "pit and bump" code of the prior art. For instance, the track of data points may comprise pits (or indents), as illustrated in Figure 3. This increases the data storing capacity of the recording medium.

The code is read using one or more colour laser detectors. Suitable laser radiation is scanned over the recording medium and an array of detectors, or read heads, receives the reflected radiation. The amount of information read is equal to the transfer speed of the read device multiplied by the number of Bits in the recording medium.

If the colour code is combined with pits and bumps, the incident laser beam is generally deflected onto one of two detectors depending on a pit or bump being read. This allows four colours to encode 8 states because the extra detector gives a new state for each colour.

The following Examples illustrate the invention.

### Example

### (a). Diacetylene ink

10,12-Pentacosadiynoic acid (1g), Durotak 180-1197 (19g) and ethyl acetate (4g) were mixed together to produce an ink solution.

The ink was coated onto clear 50 micron biaxially orientated polypropylene film using a 30 micron K-bar and RK Proofer Printer.

### (b). Leuco dye ink

An ink was formulated comprisiong: Pergascript Blue SRB-P (ex. Ciba, 1.7g), Yamada Yellow Y-726 (ex. Yamada 2.8g), Tinuvin 770DF (0.6g), Sericol Polyplast PY-383 (ex. Sericol, 56 g), Sericol Thinner ZV-557 (ex. Sericol 35.5g) and Cyracure UVI Photoinitiator UVI-6992 (ex. Dow, 3.4g).

The ink was coated onto clear 50 micron biaxially orientated polypropylene film using a 30 micron K-bar and RK Proofer Printer.

The two BOPP films coated with (a) and (b) were combined to form a laminate. The laminate was then used to construct an optical recording medium in the form of a disk.

The diacetylene layer turned essentially transparent to blue and then red on exposure to UV light emitted from a Coherent Avia 266nm UV laser or a suitable broadband light source, which includes 266nm radiation, such as that provided by a Jenten Acticure 4000.

The leuco dye layer turned colourless to green on exposure to UV light such as that emitted from the Coherent Avia 355nm UV laser.

A visible light detector was then used to retrieve information from the disk.

## Claims

1. A data storage medium comprising recording information in the form of a track of data points, the colour of each data point being selected from at least three different colours, wherein the recording information is disposed on a substrate which comprises a colour forming composition, wherein said colour forming composition comprises a colour former which is susceptible to changing to at least three different colours when irradiated with a light source, wherein the colour former is a leuco dye, a diacetylene or a carbazole.

2. A data storage medium, as described in claim 1, wherein the data points comprise multiple colours and/or shades of colour.

3. A data storage medium according to claim 1 or 2, wherein the colour forming composition further comprises a NIR-absorbing component.

4. A data storage medium according to claim 3, wherein the NIR-absorbing component is a copper(II) salt, reduced metal or mixed metal oxide, conductive polymer or NIR dye/pigment.

5. A data storage medium according to any preceding claim, wherein the colour former is a diacetylene.

6. A data storage medium according to claim 5, wherein the diacetylene is 10,12-pentacosadiynoic acid or 10,12-docosadiynoic acid or a derivative thereof.

7. A data storage medium according to claim 6, wherein the derivative is an amide derivative, preferably a propargylamide derivative.

8. A data storage medium according to any previous claim, wherein the colour forming composition has been coated on to the surface of the substrate with a binder, or has been incorporated into the material which forms the substrate, or is part of a laminate construction with the substrate.

9. A data storage medium according to any preceding claim, which is a CD or DVD.

10. A method of forming a data storage medium according to any preceding claim, comprising directing a light source corresponding to recording information onto a colour-forming substrate and the position of the substrate with respect to the laser beam is varied such that a track of data points, the colour of each point being selected from at least three different colours, is produced.

11. A method according to claim 10, wherein the light source has a wavelength in the region 120 nm to 20 microns.

12. A method according to claim 11, wherein the light source has a variable beam profile and data points of each comprising multiple colours and/or shades of colour are produced.

13. A method of reading a data storage medium according to any of claims 1-9, comprising scanning laser radiation over the medium and detecting reflected radiation using an array of colour detectors.

## Patentansprüche

1. Datenspeichermedium, umfassend Aufzeichnungsinformationen in Form einer Spur von Datenpunkten, wobei die Farbe der Datenpunkte jeweils aus mindestens drei verschiedenen Farben ausgewählt ist, wobei die Aufzeichnungsinformationen auf einem Substrat angeordnet sind, das eine farbbildende Zusammensetzung umfasst, wobei die genannte farbbildende Zusammensetzung einen Farbbildner umfasst, der dahingehend beeinflussbar ist, bei Bestrahlung mit einer Lichtquelle zu mindestens drei verschiedenen Farben zu wechseln, wobei es sich bei dem Farbbildner um einen Leucofarbstoff, ein Diacetylen oder ein Carbazol handelt.

2. Datenspeichermedium nach Anspruch 1, wobei die Datenpunkte mehrere Farben und/oder Farbtöne umfassen.

3. Datenspeichermedium nach Anspruch 1 oder 2, wobei die farbbildende Zusammensetzung weiter eine NIR-absorbierende Komponente umfasst.

4. Datenspeichermedium nach Anspruch 3, wobei es sich bei der NIR-absorbierenden Komponente um ein Kupfer(11)-Salz, reduziertes Metall oder gemischtes Metalloxid, leitfähiges Polymer oder NIR-Farbstoff/Pigment handelt.

5. Datenspeichermedium nach einem der vorangehenden Ansprüche, wobei es sich bei dem Farbbildner um ein Diacetylen handelt.

6. Datenspeichermedium nach Anspruch 5, wobei es sich bei dem Diacetylen um 10,12-Pentacosadiynsäure oder 10,12-Docosadiynsäure oder ein Derivat derselben handelt.

7. Datenspeichermedium nach Anspruch 6, wobei es sich bei dem Derivat um ein Amidderivat, vorzugsweise ein Propargylamidderivat handelt.

8. Datenspeichermedium nach einem der vorangehenden Ansprüche, wobei die farbbildende Zusammensetzung mit einem Bindemittel als Schicht auf die Oberfläche des Substrats aufgetragen wurde oder in das das Substrat bildende Material integriert wurde oder Teil eines Laminataufbaus mit dem Substrat ist.

9. Datenspeichermedium nach einem der vorangehenden Ansprüche, bei dem es sich um eine CD oder DVD handelt.

10. Verfahren des Bildens eines Datenspeichermediums nach einem der vorangehenden Ansprüche, umfassend das Richten einer Aufzeichnungsinformationen entsprechenden Lichtquelle auf ein farbbildendes Substrat und wobei die Lage des Substrats gegenüber dem Laserstrahl verändert wird, so dass ein Spur von Datenpunkten erzeugt wird, wobei die Farbe der Punkte jeweils aus mindestens drei verschiedenen Farben gewählt wird.

11. Verfahren nach Anspruch 10, wobei die Lichtquelle eine Wellenlänge im Bereich 120 nm bis 20 Mikrometer aufweist.

12. Verfahren nach Anspruch 11, wobei die Lichtquelle ein veränderliches Strahlprofil aufweist und Datenpunkte von jedem, die mehrere Farben und/oder Farbtöne umfassen, erzeugt werden.

13. Verfahren zum Lesen eines Datenspeichermediums nach einem der Ansprüche 1-9, umfassend das Abtasten des Mediums mit Laserstrahlung und Erkennen von reflektierter Strahlung mittels einer Anordnung von Farbdetektoren.

## Revendications

1. Support de stockage de données comprenant l'enregistrement d'informations sous la forme d'une piste de points de données, la couleur de chaque point de données étant sélectionnée parmi au moins trois couleurs différentes, dans lequel les informations d'enregistrement sont disposées sur un substrat qui comprend une composition colorante, cette dernière comprenant un colorant qui est susceptible de changer en au moins trois couleurs différentes lorsqu'il est irradié d'une source lumineuse, le colorant étant un colorant leuco, un diacéthylène ou un carbazole.

2. Support de stockage de données, selon la description de la revendication 1, les points de données comprenant des couleurs multiples et/ou des nuances de couleur.

3. Support de stockage de données selon la revendication 1 ou 2, la composition colorante comprenant en outre un composant d'absorption NIR.

4. Support de stockage de données selon la revendication 3, le composant d'absorption NIR étant un sel de cuivre(II), du métal réduit ou un oxyde métallique mélangé, un polymère conducteur ou un colorant/pigment NIR.

5. Support de stockage de données selon une quelconque revendication précédente, le colorant étant un diacétylène.

6. Support de stockage de données selon la revendication 5, le diacétylène étant de l'acide 10,12-pentacosadiynoïque ou de l'acide 10,12-docosadiynoïque un dérivé de ceux-ci.

7. Support de stockage de données selon la revendication 6, le dérivé étant un dérivé amide, de préférence un dérivé de propargylamide.

8. Support de stockage de données selon une quelconque revendication précédente, dans lequel la composition colorante est revêtue sur la surface du substrat d'un liant, ou a été incorporée dans le matériau qui forme le substrat, ou fait partie d'une construction stratifiée avec le substrat.

9. Milieu de stockage de données selon une quelconque revendication précédente, qui est un CD ou un DVD.

10. Procédé de formation d'un support de stockage de données selon une quelconque revendication précédente, comprenant diriger une source lumineuse correspondant aux informations d'enregistrement sur un substrat colorant et la position du substrat par rapport au faisceau laser est variée de sorte qu'une piste de points de données, la couleur de chaque point étant sélectionnée parmi au moins trois couleurs différentes, est produite.

11. Procédé selon la revendication 10, dans lequel la source lumineuse a une longueur d'onde se situant aux environs de 120 nm à 20 microns.

12. Procédé selon la revendication 11, dans lequel la source lumineuse a un profil de faisceaux variable et des points de données de chacun comprenant des couleurs multiples et/ou des nuances de couleurs sont produits.

13. Procédé de lecture d'un support de stockage de données selon l'une quelconque des revendications 1 à 9, comprenant le balayage d'un rayonnement laser sur le support et la détection du rayonnement dévié en utilisant un jeu de détecteurs de couleur.
